# EUROPEAN PATENT APPLICATION

(11) **EP 4 693 532 A1**
(43) Veröffentlichungstag der Anmeldung: **11.02.2026**
(21) Anmeldenummer: 23931224.2
(22) Anmeldetag: 03.04.2023
(51) Int. Cl.: H01M 8/0258

(54) **STAPELVORRICHTUNG, WASSERELEKTROLYSESTAPEL UND BRENNSTOFFZELLE**

(71) Anmelder: Schaeffler Technologies AG & Co. KG, 91074 Herzogenaurach (DE)
(72) Erfinder: LI, Ding, Shanghai 201804 (CN); LIU, Xin, Shanghai 201804 (CN); WEI, Jianfei, Shanghai 201804 (CN)
(86) Internationale Anmeldenummer: PCT/CN2023/085942
(87) Internationale Veröffentlichungsnummer: WO 2024/207147

(57) **Zusammenfassung**

Eine Stapelvorrichtung für einen Wasserelektrolysestapel oder eine Brennstoffzelle, die mindestens eine Stapeleinheit umfasst. Jede Stapeleinheit umfasst einen Katalysatorbeschichtungsfilm, eine Kathodenanordnung und eine Anodenanordnung; die Kathodenanordnung und die Anodenanordnung sind jeweils auf zwei gegenüberliegenden Seiten des Katalysatorbeschichtungsfilms angeordnet; die Anodenanordnung umfasst eine Anodendiffusionsschicht und die Anodendiffusionsschicht umfasst eine erste Diffusionsschicht und eine zweite Diffusionsschicht, die entlang der Dickenrichtung der Stapeleinheit aufeinander gestapelt sind; die erste Diffusionsschicht und die zweite Diffusionsschicht sind konfiguriert, um es einem Fluid zu ermöglichen, durch sie hindurch in den und aus dem Katalysatorbeschichtungsfilm zu strömen; eine Vielzahl von ersten Förderkanälen und eine Vielzahl von zweiten Förderkanälen sind zwischen der ersten Diffusionsschicht und der zweiten Diffusionsschicht gebildet, die Vielzahl von ersten Förderkanälen und die Vielzahl von zweiten Förderkanälen erstrecken sich in einer Richtung senkrecht zur Dickenrichtung der Stapeleinheit, und die Vielzahl von zweiten Förderkanälen sind im Verhältnis zu der Vielzahl von ersten Förderkanälen näher an der ersten Diffusionsschicht vorgesehen. Es ist auch ein Wasserelektrolysestapel und eine Brennstoffzelle, die die Stapelvorrichtung umfassen, vorgesehen.

## Beschreibung

### Technisches Gebiet

Die vorliegende Erfindung betrifft die Wasserstoffenergietechnologie und die damit verbundene Batterietechnologie, und insbesondere betrifft die vorliegende Erfindung eine Stapelvorrichtung für einen Wasserelektrolysestapel oder eine Brennstoffzelle sowie einen Wasserelektrolysestapel und eine Brennstoffzelle, umfassend die Stapelvorrichtung.

### Technischer Hintergrund

Da Wasserstoffenergie als neue Energieart keine Umweltverschmutzung verursacht und relativ effizient ist, rücken Stapelvorrichtungen, die Wasserstoffenergie nutzen, immer mehr in den Fokus. Die Stapelvorrichtungen können nicht nur in einem Wasserelektrolysestapel angewendet werden, sondern auch in Brennstoffzellen (z. B. Wasserstoffbrennstoffzellen, Durchflusszellen und ähnlichen Zellen usw.). Unter diesen kann der Wasserelektrolysestapel für die Elektrolyse von Wasser verwendet werden, um Wasserstoff zum Bilden von Sauerstoffgas und Wasserstoffgas zu erzeugen, während die Brennstoffzellen Sauerstoffgas und Wasserstoffgas zu Wasser synthetisieren und dadurch die chemische Energie von Wasserstoffgas und Sauerstoffgas direkt in elektrische Energie umwandeln.

Im Allgemeinen umfasst die Stapelvorrichtung zwei Endplatten und eine Vielzahl von Stapeleinheiten, die zwischen den zwei Endplatten angeordnet sind; jede Stapeleinheit umfasst einen Katalysatorbeschichtungsfilm, eine Kathodenanordnung und eine Anodenanordnung, und die Kathodenanordnung und die Anodenanordnung sind jeweils auf zwei gegenüberliegenden Seiten des Katalysatorbeschichtungsfilms vorgesehen, wobei die Anodenanordnung eine Anodendiffusionsschicht umfasst, die auf einer Anodenseite des Katalysatorbeschichtungsfilms vorgesehen ist, und die Anodendiffusionsschicht aus einem porösen Mediummaterial gebildet ist, um Wasser in eine Protonenaustauschmembran des Katalysatorbeschichtungsfilms für eine Wasserelektrolysereaktion einzuführen, oder um Luft (die Sauerstoffgas enthält) und Wasserstoffgas in die Protonenaustauschmembran für eine Hydratisierungsreaktion einzuführen.

Bei der Anwendung der vorstehend genannten Stapelvorrichtung in einem Wasserelektrolysestapel kommt es jedoch aufgrund der Beschränkungen durch die spezifische Struktur einer existierenden Anodendiffusionsschicht und der Konstruktion eines Förderkanals häufig zu einer geringeren Wasserstoffproduktionsleistung der Stapelvorrichtung aufgrund von Wassermangel auf der Anodenseite des Katalysatorbeschichtungsfilms, oder in Fällen, bei denen durch die Wasserelektrolysereaktion erzeugtes Sauerstoffgas nicht rechtzeitig von der Anodenseite des Katalysatorbeschichtungsfilms abgeführt werden kann und Löcher in der Anodendiffusionsschicht blockiert, wodurch sich die Anodendiffusionsschicht schnell erhitzt, was zu thermischen Brüchen und Ausfällen führt, usw. Da die Anodenseite des Katalysatorbeschichtungsfilms in einer sauren Umgebung liegt, führt dies außerdem zu einer starken Korrosion der Teile in der sauren Umgebung. Um eine solche Säurekorrosion zu unterdrücken, müssen verschiedene Einzelkomponenten der Anodenanordnung mit teuren Beschichtungen beschichtet werden. Wenn die Anodenanordnung aus vielen Einzelkomponenten besteht, führt dies zu höheren Produktionskosten für die Anodenanordnung und sogar für den gesamten Wasserelektrolysestapel.

Daher besteht ein dringender Bedarf an einer Stapelvorrichtung, die eine gute Förderleistung erreichen kann und kostengünstiger ist.

### Kurzdarstellung der Erfindung

Die Aufgabe der vorliegenden Erfindung ist die Bereitstellung einer Stapelvorrichtung. Die Stapelvorrichtung verfügt über eine deutlich verbesserte Förderleistung und kann dadurch eine höhere Wasserstoffproduktionsleistung erreichen, wenn sie in einem Wasserelektrolysestapel angewendet wird, und ist in der Lage, eine Hydratisierungsreaktion zu fördern, um die Energieeffizienz einer Brennstoffzelle zu verbessern, wenn sie in der Brennstoffzelle angewendet wird.

In einem ersten Aspekt sieht eine Ausführungsform der vorliegenden Erfindung eine Stapelvorrichtung vor, die mindestens eine Stapeleinheit umfasst, wobei jede Stapeleinheit einen Katalysatorbeschichtungsfilm, eine Kathodenanordnung und eine Anodenanordnung umfasst; die Kathodenanordnung und die Anodenanordnung sind jeweils auf zwei gegenüberliegenden Seiten des Katalysatorbeschichtungsfilms vorgesehen, wobei die Anodenanordnung eine Anodendiffusionsschicht umfasst, die Anodendiffusionsschicht eine erste Diffusionsschicht und eine zweite Diffusionsschicht umfasst, die entlang einer Dickenrichtung der Stapeleinheit aufeinander gestapelt sind, und die erste Diffusionsschicht und die zweite Diffusionsschicht konfiguriert sind, um es einem Fluid zu ermöglichen, durch sie hindurch in den Katalysatorbeschichtungsfilm undaus dem Katalysatorbeschichtungsfilm zu strömen, und wobei eine Vielzahl von ersten Förderkanälen und eine Vielzahl von zweiten Förderkanälen zwischen der ersten Diffusionsschicht und der zweiten Diffusionsschicht gebildet sind, die Vielzahl von ersten Förderkanälen und die Vielzahl von zweiten Förderkanälen sich in einer Richtung senkrecht zur Dickenrichtung der Stapeleinheit erstrecken und die Vielzahl von zweiten Förderkanälen im Verhältnis zu der Vielzahl von ersten Förderkanälen näher an der ersten Diffusionsschicht vorgesehen sind.

In einer bevorzugten Ausführungsform der vorliegenden Erfindung ist eine Breite jedes der ersten Förderkanäle größer als eine Breite jedes der zweiten Förderkanäle und eine Tiefe jedes der ersten Förderkanäle ist größer als eine Tiefe jedes der zweiten Förderkanäle.

In einer bevorzugten Ausführungsform der vorliegenden Erfindung erstreckt sich jeder der ersten Förderkanäle durch die Anodendiffusionsschicht entlang einer ersten Richtung, die Vielzahl der zweiten Förderkanäle umfasst eine Vielzahl von dritten Förderkanälen, die sich durch die Anodendiffusionsschicht entlang der ersten Richtung erstrecken, und eine Vielzahl von vierten Förderkanälen, die sich durch die Anodendiffusionsschicht entlang einer zweiten Richtung erstrecken, welche die erste Richtung schneidet, und die erste Richtung und die zweite Richtung beide senkrecht zu einer Dickenrichtung des Katalysatorbeschichtungsfilms verlaufen.

In einer bevorzugten Ausführungsform der vorliegenden Erfindung stehen die ersten Förderkanäle und die dritten Förderkanäle sowie die vierten Förderkanäle miteinander in Fluidverbindung.

In einer bevorzugten Ausführungsform der vorliegenden Erfindung sind die Vielzahl von ersten Förderkanälen und die Vielzahl von dritten Förderkanälen in der zweiten Richtung zueinander versetzt und zwischen jeweils zwei angrenzenden ersten Förderkanälen sind zwei oder mehr voneinander beabstandete dritte Förderkanäle vorgesehen.

In einer bevorzugten Ausführungsform der vorliegenden Erfindung erstreckt sich jeder der ersten Förderkanäle linear entlang der ersten Richtung, jeder der dritten Förderkanäle erstreckt sich linear oder krummlinig entlang der ersten Richtung und jeder der vierten Förderkanäle erstreckt sich linear oder krummlinig entlang der zweiten Richtung.

In einer bevorzugten Ausführungsform der vorliegenden Erfindung sind die erste Diffusionsschicht und die zweite Diffusionsschicht integral gebildet.

In einer bevorzugten Ausführungsform der vorliegenden Erfindung werden die erste Diffusionsschicht und die zweite Diffusionsschicht durch ein 3D-Druckverfahren hergestellt.

In einer bevorzugten Ausführungsform der vorliegenden Erfindung ist die erste Diffusionsschicht näher an dem Katalysatorbeschichtungsfilm vorgesehen als die zweite Diffusionsschicht und eine Dicke der ersten Diffusionsschicht ist geringer als eine Dicke der zweiten Diffusionsschicht.

In einer bevorzugten Ausführungsform der vorliegenden Erfindung weist die erste Diffusionsschicht eine Vielzahl von ersten Löchern auf, die es einem Fluid ermöglichen, durch die erste Diffusionsschicht zu strömen, die zweite Diffusionsschicht weist eine Vielzahl von zweiten Löchern auf, die es einem Fluid ermöglichen, durch die zweite Diffusionsschicht zu strömen, und die Größen der ersten Löcher der ersten Diffusionsschicht sind kleiner als die Größen der zweiten Löcher der zweiten Diffusionsschicht.

In einer bevorzugten Ausführungsform der vorliegenden Erfindung umfasst die Anodenanordnung eine Anodenplatte und die Anodendiffusionsschicht ist zwischen dem Katalysatorbeschichtungsfilm und der Anodenplatte vorgesehen.

In einem zweiten Aspekt sieht eine Ausführungsform der vorliegenden Erfindung einen Wasserelektrolysestapel vor, der die Stapelvorrichtung wie vorstehend beschrieben umfasst.

In einem dritten Aspekt sieht eine Ausführungsform der vorliegenden Erfindung eine Brennstoffzelle vor, die die Stapelvorrichtung wie vorstehend beschrieben umfasst.

Gemäß der vorliegenden Erfindung kann, wenn die vorstehend erwähnte Stapelvorrichtung in einem Wasserelektrolysestapel angewendet wird, durch Vorsehen erster Förderkanäle und zweiter Förderkanäle, die voneinander funktionell unabhängig sind, aber in der Anodendiffusionsschicht in Fluidverbindung miteinander stehen, dem Katalysatorbeschichtungsfilm problemlos eine große Menge Wasser zugeführt werden und gleichzeitig kann eine große Menge an Sauerstoffgas, das durch eine Wasserelektrolysereaktion erzeugt wird, rechtzeitig abgeführt werden, wodurch die Förderleistung verbessert und die Wasserstoffproduktionsleistung des Wasserelektrolysestapels verbessert werden können. Wenn die vorstehend erwähnte Stapelvorrichtung in einer Brennstoffzelle angewendet wird, kann durch das Vorsehen von ersten Förderkanälen und zweiten Förderkanälen, die voneinander funktionell unabhängig sind, aber in der Anodendiffusionsschicht in Fluidverbindung miteinander stehen, eine große Menge sauerstoffgashaltiger Luft und Wasserstoffgas problemlos dem Katalysatorbeschichtungsfilm zugeführt werden, wodurch die Energieeffizienz der Brennstoffzelle verbessert werden kann. Da die Anodendiffusionsschicht als integrale Einheit gebildet ist, können außerdem Beschichtungen eingespart und Kosten gesenkt werden und gleichzeitig können Kontaktwiderstand und Montagetoleranzen zwischen den Einzelkomponenten der Anodenanordnung verringert werden, wodurch die Effizienz der Stapeleinheit verbessert wird.

### Kurzbeschreibung der Zeichnungen

Im Folgenden werden in Bezug auf die beigefügten Zeichnungen Merkmale, Vorteile und technische Wirkungen beispielhafter Ausführungsformen der vorliegenden Anmeldung beschrieben.
FIG. 1 zeigt eine schematische Gesamtdarstellung einer Stapelvorrichtung gemäß einer Ausführungsform der vorliegenden Erfindung;
FIG. 2 zeigt eine Schnittansicht einer Teilstruktur einer Stapeleinheit einer Stapelvorrichtung gemäß einer Ausführungsform der vorliegenden Erfindung; und
FIG. 3 zeigt eine dreidimensionale schematische Darstellung einer Anodendiffusionsschicht gemäß einer Ausführungsform der vorliegenden Erfindung.

### Ausführliche Beschreibung von Ausführungsformen

Die Umsetzung der vorliegenden Anmeldung wird nachfolgend in Verbindung mit den beigefügten Zeichnungen und Ausführungsformen ausführlicher beschrieben. Die ausführliche Beschreibung der nachfolgenden Ausführungsformen und die beigefügten Zeichnungen dienen der beispielhaften Veranschaulichung der Prinzipien der vorliegenden Anmeldung, können jedoch nicht zur Einschränkung des Schutzumfangs der vorliegenden Anmeldung herangezogen werden, d. h., die vorliegende Anmeldung ist nicht auf die beschriebenen Ausführungsformen beschränkt.

Sofern in der Beschreibung der vorliegenden Anmeldung nichts anderes angegeben ist, dienen die durch die Begriffe "obere/r/s", "untere/r/s", "innere/r/s", "äußere/r/s" usw. angegebenen Ausrichtungen oder Positionsbeziehungen lediglich der Vereinfachung der Beschreibung der vorliegenden Anmeldung und bedeuten nicht, dass die betreffende Vorrichtung oder das betreffende Element eine bestimmte Ausrichtung aufweisen und in einer bestimmten Ausrichtung konstruiert und betrieben werden muss, und können daher nicht als Einschränkung der vorliegenden Anmeldung ausgelegt werden. Des Weiteren werden die Begriffe "erste/r/s" und "zweite/r/s" nur zu beschreibenden Zwecken verwendet und sollten nicht als Hinweis oder Andeutung einer relativen Wichtigkeit verstanden werden. Die in der folgenden Beschreibung erscheinenden Orientierungsbegriffe sind die in den Figuren dargestellten Richtungen und schränken die spezifische Struktur der vorliegenden Anmeldung nicht ein.

In der Beschreibung der vorliegenden Anmeldung ist außerdem zu beachten, dass, sofern nicht anders klar angegeben und definiert, die Begriffe "montieren", "verbunden sein", "verbinden" in einem breiten Sinne zu verstehen sind und beispielsweise eine feste Verbindung, eine lösbare Verbindung oder eine integrale Verbindung bedeuten können und eine direkte Verbindung oder eine indirekte Verbindung über ein Zwischenmedium sein können. Für den Fachmann sind die spezifischen Bedeutungen der vorstehend genannten Begriffe in der vorliegenden Anmeldung auf der Grundlage der spezifischen Umstände zu verstehen.

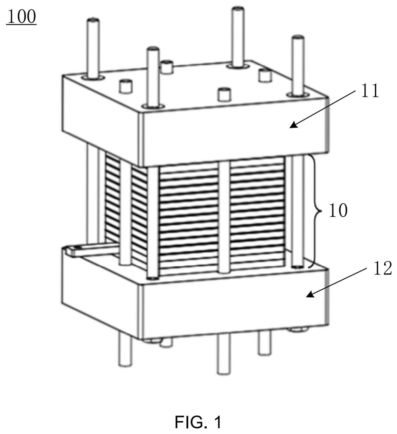

FIG. 1 zeigt eine Stapelvorrichtung 100 gemäß einer Ausführungsform der vorliegenden Erfindung. Die Stapelvorrichtung 100 umfasst zwei Endplatten 11 und 12, die voneinander beabstandet sind, und mindestens eine Stapeleinheit 10, die zwischen den zwei Endplatten 11 und 12 angeordnet ist. Die zwei Endplatten sind durch eine Vielzahl von Befestigungselementen (z. B. eine Vielzahl von Positionierungsstiften oder eine Vielzahl von Schrauben usw.) fest miteinander verbunden, wodurch mindestens eine dazwischen befindliche Stapeleinheit 103 fest eingeklemmt wird. Falls die Stapelvorrichtung 100 eine Vielzahl von Stapeleinheiten 10 umfasst, ist die Vielzahl von Stapeleinheiten 10 zwischen den beiden Endplatten 11 und 12 aufeinander gestapelt. Natürlich ist die vorliegende Erfindung nicht darauf beschränkt und die Anzahl der zwischen den beiden Endplatten 11 und 12 vorgesehenen Stapeleinheiten 10 kann auch nur eine sein.

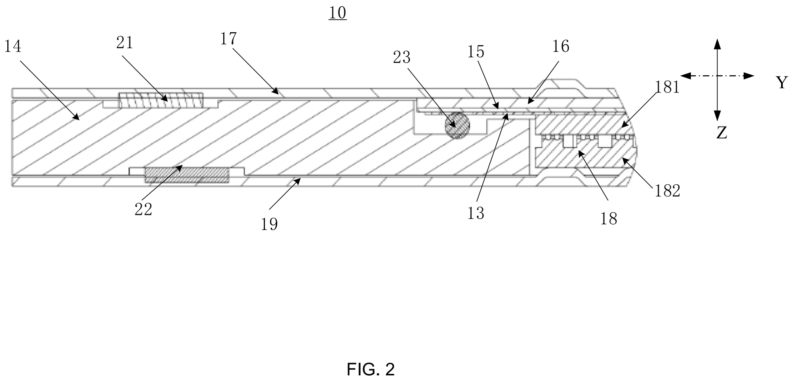

FIG. 2 zeigt eine Schnittansicht einer Teilstruktur einer Stapeleinheit 10 einer Stapelvorrichtung gemäß einer Ausführungsform der vorliegenden Erfindung. Die nachfolgende Beschreibung unter Bezugnahme auf FIG. 2 erfolgt anhand eines Beispiels der Anwendung der Stapelvorrichtung gemäß einer Ausführungsform der vorliegenden Erfindung in einem Wasserelektrolysestapel.

Wie in FIG. 2 gezeigt, umfasst jede Stapeleinheit 10 einen Katalysatorbeschichtungsfilm 13 (CCM genannt), eine Kathodenanordnung und eine Anodenanordnung. Die Kathodenanordnung und die Anodenanordnung sind jeweils auf zwei gegenüberliegenden Seiten des Katalysatorbeschichtungsfilms 13 vorgesehen. Insbesondere ist die Kathodenanordnung auf einer Kathodenseite des Katalysatorbeschichtungsfilms 13 vorgesehen und die Anodenanordnung ist auf einer Anodenseite des Katalysatorbeschichtungsfilms 13 vorgesehen. Wenn die Stapelvorrichtung 100 nur eine Stapeleinheit 10 umfasst, liegen die Kathodenanordnung und die Anodenanordnung der einen Stapeleinheit 10 an den beiden Endplatten 11 bzw. 12 an. Wenn die Stapelvorrichtung 100 eine Vielzahl von Stapeleinheiten 10 umfasst, grenzen, mit Ausnahme der zwei Stapeleinheiten 10, die den beiden Endplatten 11 bzw. 12 am nächsten sind, die Kathodenanordnung jeder Stapeleinheit 10 und die Anodenanordnung einer angrenzenden Stapeleinheit 10 aneinander an, und die Anodenanordnung einer Stapeleinheit 10 und die Kathodenanordnung der anderen angrenzenden Stapeleinheit 10 grenzen aneinander an.

Jede Stapeleinheit 10 umfasst ferner einen Montagerahmen 14, der zum Montieren und Stützen des Katalysatorbeschichtungsfilms 13 verwendet wird. In einer beispielhaften Ausführungsform ist der Montagerahmen 14 um den Katalysatorbeschichtungsfilm 13 herum vorgesehen und umfasst einen inneren Teil und einen äußeren Teil, die miteinander verbunden sind. Der äußere Teil ist um eine Umfangsseite des inneren Teils herum vorgesehen. Die Dicke des inneren Teils ist geringer als die Dicke des äußeren Teils, wodurch zwischen dem inneren Teil und dem äußeren Teil eine Stufe gebildet wird, sodass ein Umfangskantenabschnitt des Katalysatorbeschichtungsfilms 13 auf dem inneren Teil des Montagerahmens 14 abgelegt und gestützt werden kann, während der äußere Teil des Montagerahmens 14 um den gesamten Katalysatorbeschichtungsfilm 13 herum vorgesehen ist. Beispielsweise können der innere Teil und der äußere Teil integral gebildet sein.

Der Katalysatorbeschichtungsfilm 13 umfasst eine Protonenaustauschmembran, eine Kathodenkatalysatorschicht (in der Figur nicht gezeigt), die auf eine Oberfläche auf der Kathodenseite der Protonenaustauschmembran aufgebracht ist, und eine Anodenkatalysatorschicht (in der Figur nicht gezeigt), die auf eine Oberfläche auf der Anodenseite der Protonenaustauschmembran aufgebracht ist. Die Kathodenkatalysatorschicht und die Anodenkatalysatorschicht können beispielsweise durch Schlitzdüsenauftragen usw. direkt auf zwei gegenüberliegende Seiten der Protonenaustauschmembran aufgetragen werden. Dieses Auftragungsverfahren ist einfach, stellt geringe Anforderungen an die Ausrüstung, erfordert einfache und bequeme Arbeitsschritte und kann die Nutzungsrate eines Katalysators effektiv verbessern.

Die Kathodenanordnung ist auf einer Kathodenseite (obere Seite in FIG. 2) des Katalysatorbeschichtungsfilms 13 vorgesehen und umfasst Komponenten wie eine Kathodendiffusionsschicht 15, eine Kathodenträgerplatte 16 und eine Kathodenplatte 17, die nacheinander entlang einer Richtung weg von dem Katalysatorbeschichtungsfilm 13 vorgesehen sind. Die Kathodendiffusionsschicht 15 ist neben der Kathodenkatalysatorschicht vorgesehen. Für die Kathodendiffusionsschicht 15 können Materialien wie poröses Titan, Kohlenstoffgewebe und Kohlenstoffpapier ausgewählt werden; und das spielt eine Rolle bei der Leitung von Elektrizität und der Beförderung von Wasser und Wasserstoffgas. Wie in FIG. 2 gezeigt, ist die Kathodenträgerplatte 16 auf einer Seite der Kathodendiffusionsschicht 15 weg von der Kathodenkatalysatorschicht vorgesehen, um die Kathodendiffusionsschicht 15 zu stützen. Darüber hinaus kann die Kathodenträgerplatte 16 ferner eine Vielzahl von Mikroporen umfassen, die bei der weiteren Beförderung von Wasser und Wasserstoffgas eine Rolle spielen. Die Kathodenträgerplatte 16 kann unter Verwendung korrosionsbeständiger Materialien wie beispielsweise rostfreiem Stahl (z. B. Eisen) gefertigt werden. Beispielsweise sind die Kathodendiffusionsschicht 15, die Kathodenträgerplatte 16 und der Katalysatorbeschichtungsfilm 13 in einem Raum enthalten, der vom äußeren Teil des Montagerahmens 14 umschlossen ist, d. h., der äußere Teil des Montagerahmens 14 ist um den Katalysatorbeschichtungsfilm 13, die Kathodendiffusionsschicht 15 und die Kathodenträgerplatte 16 herum vorgesehen. Die Kathodenplatte 17 ist auf einer Seite der Kathodenträgerplatte 16 weg von der Kathodendiffusionsschicht 15 vorgesehen. Die Kathodenplatte 17 kann aus korrosionsbeständigen Materialien wie rostfreiem Stahl gefertigt sein oder aus einem Kohlefasermaterial oder einem Kunststoffmaterial bestehen.

In ähnlicher Weise ist die Anodenanordnung auf einer Anodenseite (untere Seite in FIG. 2) des Katalysatorbeschichtungsfilms 13 vorgesehen und umfasst Komponenten wie eine Anodendiffusionsschicht 18 und eine Anodenplatte 19, die nacheinander entlang einer Richtung weg von dem Katalysatorbeschichtungsfilm 13 vorgesehen sind. Die Anodendiffusionsschicht 18 ist neben der Anodenkatalysatorschicht vorgesehen. Die Anodendiffusionsschicht 18 ist aus einem porösen Mediummaterial (z. B. Titan) gebildet, so dass bei der Wasserelektrolyse Wasser für eine Wasserelektrolysereaktion in die Protonenaustauschmembran des Katalysatorbeschichtungsfilms 13 eingeführt wird, an einer Anode durch den Katalysatorbeschichtungsfilm 13 erzeugtes Sauerstoffgas und Wasser nach der Wasserelektrolysereaktion abgeführt werden, und während einer Hydratisierungsreaktion Sauerstoffgas und Wasserstoffgas in die Protonenaustauschmembran des Katalysatorbeschichtungsfilms 13 eingeführt werden. Die Anodendiffusionsschicht 18 ist in einem Raum enthalten, der vom inneren Teil des Montagerahmens 14 umschlossen ist, d. h., der innere Teil des Montagerahmens 14 ist um die Anodendiffusionsschicht 18 herum vorgesehen. Die Struktur der Anodendiffusionsschicht 18 wird später ausführlich beschrieben. Auf einer Seite der Anodendiffusionsschicht 18 weg von dem Katalysatorbeschichtungsfilm 13 ist eine Anodenplatte 19 vorgesehen. Die Anodenplatte 19 kann unter Verwendung von korrosionsbeständigen Materialien wie rostfreiem Stahl gefertigt sein oder aus Kohlefasermaterial oder einem Kunststoffmaterial usw. bestehen.

Unter fortlaufender Bezugnahme auf FIG. 2 bedeckt die Kathodenplatte 17 die gesamten oberen Oberflächen des Montagerahmens 14 und der Kathodenträgerplatte 16, während die Anodenplatte 19 die gesamten unteren Oberflächen des Montagerahmens 14 und der Anodendiffusionsschicht 18 bedeckt. Somit werden die Kathodenträgerplatte 16, die Kathodendiffusionsschicht 15, der Katalysatorbeschichtungsfilm 13, der Montagerahmen 14 und die Anodendiffusionsschicht 18 zwischen der Kathodenplatte 17 und der Anodenplatte 19 angeordnet. In einem Beispiel sind Positionierungslöcher an der Anodenplatte 19, dem Montagerahmen 14 und der Kathodenplatte 17 vorgesehen und die Vielzahl der vorstehend erwähnten Befestigungselemente (z. B. die Vielzahl von Positionierungsstiften oder die Vielzahl von Schrauben usw.), die durch die beiden Endplatten verlaufen, können gleichzeitig auch entsprechend durch diese Positionierungslöcher verlaufen, um eine feste Positionierung des Katalysatorbeschichtungsfilms 13, der Kathodenanordnung und der Anodenanordnung zueinander zu erreichen.

Wenn die Stapelvorrichtung 100 in einem Wasserelektrolysestapel angewendet wird, werden daher, nachdem Wasser in jede Stapeleinheit 10 in der Stapelvorrichtung 100 eingetreten ist, Sauerstoffgas und Wasserstoffionen auf der Anodenseite des Katalysatorbeschichtungsfilms 13 mittels eines Anodenkatalysators erzeugt, wobei Sauerstoffgas direkt über die Anodendiffusionsschicht 18 abgeführt wird, während Wasserstoffionen zuerst durch die Protonenaustauschmembran die Kathodenseite erreichen und dann Wasserstoffgas auf der Kathodenseite des Katalysatorbeschichtungsfilms 13 erzeugen und Wasserstoffgas nacheinander über die Kathodendiffusionsschicht 15 oder sogar die Kathodenträgerplatte 16 der Kathodenanordnung abgeführt wird.

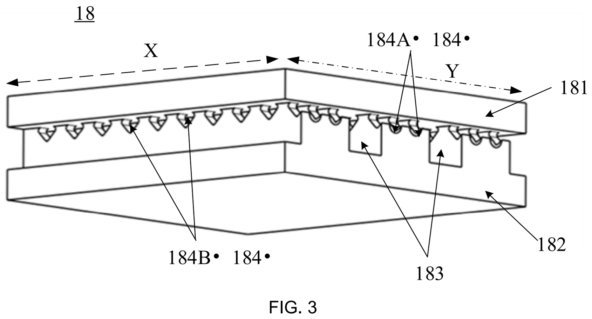

Die Anodendiffusionsschicht 18 gemäß einer Ausführungsform der vorliegenden Erfindung wird nachfolgend unter Bezugnahme auf FIG. 3 und in Kombination mit FIG. 2 näher ausgeführt. Die nachfolgende Beschreibung unter Bezugnahme auf FIG. 3 erfolgt ebenfalls anhand des Beispiels der Anwendung der Stapelvorrichtung gemäß einer Ausführungsform der vorliegenden Erfindung in einem Wasserelektrolysestapel. Wie in FIG. 3 gezeigt, ist die Anodendiffusionsschicht 18 zwischen dem Katalysatorbeschichtungsfilm 13 und der Anodenplatte 19 vorgesehen und in einem Raum untergebracht, der durch den inneren Teil des Montagerahmens 14 definiert ist. Die Anodendiffusionsschicht 18 umfasst eine erste Diffusionsschicht 181 und eine zweite Diffusionsschicht 182, die entlang der Dickenrichtung Z der Stapeleinheit 10 aufeinander gestapelt sind (wie in FIG. 2 durch durchgezogene Doppelpfeile gezeigt). Die erste Diffusionsschicht 181 und die zweite Diffusionsschicht 182 sind konfiguriert, um es einem Fluid (z. B. Wasser oder Gas) zu ermöglichen, durch sie hindurch in den Katalysatorbeschichtungsfilm 13 und aus dem Katalysatorbeschichtungsfilm 13 zu strömen. Die erste Diffusionsschicht 181 ist näher an dem Katalysatorbeschichtungsfilm 13 vorgesehen als die zweite Diffusionsschicht 182.

Die erste Diffusionsschicht 181 weist eine Vielzahl von ersten Löchern auf, die es einem Fluid ermöglichen, durch die erste Diffusionsschicht 181 zu strömen. Eine Richtung, in der die ersten Löcher die erste Diffusionsschicht 181 durchdringen, ist eine Dickenrichtung der Anodendiffusionsschicht 18, d. h. die Dickenrichtung Z der Stapeleinheit 10. Die ersten Löcher weisen eine Porengröße von 20 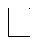 m bis 100 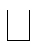 m auf. Die zweite Diffusionsschicht 182 weist eine Vielzahl von zweiten Löchern auf, die es einem Fluid ermöglichen, durch die zweite Diffusionsschicht 182 zu strömen. Eine Richtung, in der die zweiten Löcher die zweite Diffusionsschicht 182 durchdringen, ist auch die Dickenrichtung der Anodendiffusionsschicht 18. Die zweiten Löcher sind in Bezug auf die Porengröße größer als die ersten Löcher und weisen beispielsweise eine Porengröße von 200 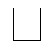 m bis 1000 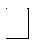 m auf, und vorzugsweise beträgt die Porengröße der zweiten Löcher ungefähr 500 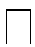 m. Daher wird einerseits die Porengröße der ersten Diffusionsschicht 181, die nahe des Katalysatorbeschichtungsfilms 13 vorgesehen ist, kleiner gewählt, damit die erste Diffusionsschicht 181 den Katalysatorbeschichtungsfilm 13 besser stützen kann; und andererseits wird die Porengröße der zweiten Diffusionsschicht 182, die vom Katalysatorbeschichtungsfilm 13 weg vorgesehen ist, größer gewählt, damit eine große Menge an Fluid leichter durch die zweiten Löcher strömen und in die später beschriebenen ersten Förderkanäle 183 eintreten kann, wodurch die Wasserstoffproduktionsleistung der Stapeleinheit weiter verbessert wird. Unter fortlaufender Bezugnahme auf FIG. 2 ist die Dicke der ersten Diffusionsschicht 181 geringer als die Dicke der zweiten Diffusionsschicht 182. Beispielsweise kann eine Dicke der ersten Diffusionsschicht 181 im Bereich von 0,1 mm bis 1 mm liegen, und eine Dicke der zweiten Diffusionsschicht 182 kann im Bereich von 1 mm bis 5 mm liegen. Da die Dicke der ersten Diffusionsschicht 181, die näher an der Katalysatorbeschichtung 13 vorgesehen ist, geringer ist, kann im Wasserelektrolysestapel das in die Anodendiffusionsschicht 18 eintretende Wasser schnell und einfach durch die Vielzahl von ersten Löchern der ersten Diffusionsschicht 181 strömen, um den Katalysatorbeschichtungsfilm 13 für eine Elektrohydrolysereaktion zu erreichen, und gleichzeitig können das durch die Elektrohydrolysereaktion erzeugte Sauerstoffgas und überschüssiges Wasser durch die Vielzahl von ersten Löchern der ersten Diffusionsschicht 181 in die später beschriebenen zweiten Förderkanäle 184 eintreten und weiter an den äußeren Teil der Stapeleinheit 10 abgeführt werden. In ähnlicher Weise können in der Brennstoffzelle Luft und Wasserstoffgas, die in die Anodendiffusionsschicht 18 eintreten, schnell und einfach durch die Vielzahl von ersten Löchern der ersten Diffusionsschicht 181 gelangen und den Katalysatorbeschichtungsfilm 13 für eine Hydratisierungsreaktion erreichen.

Die erste Diffusionsschicht 181 und die zweite Diffusionsschicht 182 können integral gebildet sein. Beispielsweise können die erste Diffusionsschicht 181 und die zweite Diffusionsschicht 182 unter Verwendung der 3D-Drucktechnologie zu einer Einheit gebildet werden. Somit können einerseits die Einzelkomponenten der Anodenanordnung reduziert werden, wodurch nicht nur die auf die Oberflächen der Einzelkomponenten der Anodenanordnung aufgetragene Beschichtung verringert werden kann, wodurch die Kosten der Anodenanordnung und sogar der gesamten Stapeleinheit 10 gesenkt werden, sondern auch der Kontaktwiderstand zwischen den Einzelkomponenten der Stapeleinheit verringert werden; und währenddessen werden die Montagetoleranzen der Stapeleinheit verringert, um einen Gasaustritt zu verringern, wodurch die Produktionsleistung der Stapelvorrichtung verbessert werden kann. Natürlich ist die vorliegende Erfindung nicht darauf beschränkt. Die erste Diffusionsschicht 181 und die zweite Diffusionsschicht 182 können auch getrennt gebildet werden.

Zwischen der ersten Diffusionsschicht 181 und der zweiten Diffusionsschicht 182 sind eine Vielzahl von ersten Förderkanälen 183 und eine Vielzahl von zweiten Förderkanälen 184 gebildet. Vorzugsweise sind die Vielzahl von ersten Förderkanälen 183 und die Vielzahl von zweiten Förderkanälen 184 auf der zweiten Diffusionsschicht 182 gebildet. Jeder erste Förderkanal 183 erstreckt sich entlang einer ersten Richtung X durch die Anodendiffusionsschicht 18, wobei die erste Richtung X senkrecht zu einer Dickenrichtung der Anodendiffusionsschicht 18 ist, wie in FIG. 3 durch gepunktete Doppelpfeile gezeigt. Die Vielzahl von ersten Förderkanälen 183 ist in einer zweiten Richtung Y voneinander beabstandet, vorzugsweise gleichmäßig beabstandet, und die zweite Richtung Y schneidet die erste Richtung X, verläuft vorzugsweise senkrecht dazu, und ist auch senkrecht zur Dickenrichtung der Anodendiffusionsschicht 18, wie in FIG. 3 durch gestrichelte Doppelpfeile gezeigt. Die ersten Förderkanäle 183 sind konfiguriert, um es einem Fluid zu ermöglichen, zum Katalysatorbeschichtungsfilm 13 befördert zu werden. Die Vielzahl von zweiten Förderkanälen 184 ist voneinander beabstandet, vorzugsweise gleichmäßig beabstandet. Jeder zweite Förderkanal 184 erstreckt sich ebenfalls in einer Richtung senkrecht zur Dickenrichtung Z des Katalysatorbeschichtungsfilms 13 und ist konfiguriert, um es einem Fluid zu ermöglichen, zum Katalysatorbeschichtungsfilm 13 befördert zu werden, und/oder um das Fluid, das von dem Katalysatorbeschichtungsfilm 13 kommt, abzuführen.

Wenn die Stapelvorrichtung 10 in einem Wasserelektrolysestapel angewendet wird, übernehmen die ersten Förderkanäle 183 hauptsächlich die Funktion, Wasser zum Katalysatorbeschichtungsfilm 13 zu befördern, während die zweiten Förderkanäle 184 hauptsächlich die Funktion übernehmen, überschüssiges Wasser abzuführen und Sauerstoffgas zu befördern. Wenn die Stapelvorrichtung 10 in einer Brennstoffzelle angewendet wird, übernehmen die ersten Förderkanäle 183 hauptsächlich die Funktion, Luft (die Sauerstoffgas enthält) zum Katalysatorbeschichtungsfilm 13 zu befördern, und die zweiten Förderkanäle 184 übernehmen hauptsächlich die Funktion, Luft zum Katalysatorbeschichtungsfilm 13 zu befördern. Somit sind die ersten Förderkanäle 183 und die zweiten Förderkanäle 184 voneinander funktionell unabhängig, können aber in Bezug auf die Fluidverbindung miteinander in Fluidverbindung stehen.

Die Vielzahl von zweiten Förderkanälen 184 liegt näher an der ersten Diffusionsschicht 181 als die Vielzahl von ersten Förderkanälen 183. Das heißt, in der Dickenrichtung Z der Stapeleinheit 10 sind die zweiten Förderkanäle 184 oberhalb der ersten Förderkanäle 183 vorgesehen. Die zweiten Förderkanäle 184 sind näher an der ersten Diffusionsschicht 181 vorgesehen, das heißt näher an dem Katalysatorbeschichtungsfilm 13. Daher kann in dem Fall, dass die Stapelvorrichtung 100 in einer Wasserelektrolysezelle angewendet wird, durch eine Hydrolysereaktion erzeugtes Sauerstoffgas rechtzeitig abgeführt werden, um die Fälle zu verringern, in denen das durch eine Wasserelektrolysereaktion erzeugte Sauerstoffgas nicht rechtzeitig von der Anodenseite des Katalysatorbeschichtungsfilms 13 abgeführt werden kann und die Löcher in der Anodendiffusionsschicht 18 blockiert, so dass sich die Anodendiffusionsschicht 18 schnell erhitzt und thermische Bruchausfälle verursacht, was die Wasserstoffproduktionsleistung beeinträchtigt.

Vorzugsweise ist eine Breite jedes ersten Förderkanals 183 größer als eine Breite jedes zweiten Förderkanals 184, und eine Tiefe jedes ersten Förderkanals 183 ist größer als eine Tiefe jedes zweiten Förderkanals 184. Dadurch, dass die Größe der ersten Förderkanäle größer ist als die Größe der zweiten Förderkanäle, kann eine große Anzahl von zu reagierenden Fluiden leicht zum Katalysatorbeschichtungsfilm 13 befördert werden, wodurch die chemische Reaktionsrate der Stapeleinheit erhöht werden kann.

Unter fortlaufender Bezugnahme auf FIG. 3 umfasst die Vielzahl von zweiten Förderkanälen 184 vorzugsweise eine Vielzahl von dritten Förderkanälen 184A, die die Anodendiffusionsschicht 18 entlang der ersten Richtung X durchdringen, und eine Vielzahl von vierten Förderkanälen 184B, die die Anodendiffusionsschicht 18 entlang der zweiten Richtung Y durchdringen, und die dritten Förderkanäle 184A stehen in Fluidverbindung mit den vierten Förderkanälen 184B. Beispielsweise sind die dritten Förderkanäle 184A und die vierten Förderkanäle 184B senkrecht zueinander vorgesehen. In diesem Fall sind die zweiten Förderkanäle 184 vorgesehen, um sich durch die Anodendiffusionsschicht 18 sowohl entlang der ersten Richtung X als auch der zweiten Richtung Y zu erstrecken, d. h. die zweiten Förderkanäle 184 können die Anodendiffusionsschicht 18 entlang zweier Dimensionen senkrecht zur Dickenrichtung der Anodendiffusionsschicht 18 durchdringen, so dass Sauerstoffgas, das durch eine Hydrolysereaktion erzeugt wird, während einer Wasserelektrolysereaktion effektiver abgeführt werden kann, um die Fälle zu reduzieren, in denen das Sauerstoffgas, das nicht rechtzeitig abgeführt werden kann, die Löcher in der Anodendiffusionsschicht 18 blockiert, so dass sich die Anodendiffusionsschicht 18 schnell erhitzt und thermische Bruchausfälle verursacht, was die Wasserstoffproduktionsleistung beeinträchtigt.

Die Vielzahl von zweiten Förderkanälen 184 kann jedoch auch nur eine Vielzahl von dritten Förderkanälen 184A umfassen, die die Anodendiffusionsschicht 18 entlang der ersten Richtung X durchdringen, oder kann auch nur eine Vielzahl von vierten Förderkanälen 184B umfassen, die die Anodendiffusionsschicht 18 entlang der zweiten Richtung Y durchdringen, was je nach praktischer Anwendung ausgewählt werden kann. Wie wiederum in FIG. 3 gezeigt, sind die Breiten der ersten Förderkanäle 183 größer als die Breiten der dritten Förderkanäle 184A und der vierten Förderkanäle 184B, und die Tiefen der ersten Förderkanäle 183 sind größer als die Tiefen der dritten Förderkanäle 184A und der vierten Förderkanäle 184B. Des Weiteren erstreckt sich jeder erste Förderkanal 183 linear entlang der ersten Richtung X und jeder erste Förderkanal 183 weist eine rechteckige Querschnittsform auf. Die geraden ersten Förderkanäle 183 mit größerer Abmessung ermöglichen es einer großen Anzahl von Fluiden, einfach zum Katalysatorbeschichtungsfilm 13 befördert zu werden. Darüber hinaus können sich die dritten Förderkanäle 184A linear oder krummlinig (z. B. schlangenlinienförmig) entlang der ersten Richtung X erstrecken und die vierten Förderkanäle 184B können sich linear oder krummlinig (z. B. schlangenlinienförmig) entlang der zweiten Richtung Y erstrecken. Des Weiteren können die dritten Förderkanäle 184A und die vierten Förderkanäle 184B eine erdbeerartige, rautenförmige, halbkreisförmige, kreisförmige, elliptische Form oder dergleichen im Querschnitt aufweisen.

Unter fortlaufender Bezugnahme auf FIG. 3 sind die Vielzahl von ersten Förderkanälen 183 und die Vielzahl von dritten Förderkanälen 184A in der zweiten Richtung Y zueinander versetzt. Das heißt, auf einer Ebene senkrecht zur Dickenrichtung der Stapeleinheit 10 überlappt sich eine Projektion jedes ersten Förderkanals 183 nicht mit einer Projektion jedes dritten Förderkanals 184A. Beispielsweise sind zwischen jeweils zwei angrenzenden ersten Förderkanälen 183 zwei oder mehr voneinander beabstandete dritte Förderkanäle 184A vorgesehen. Vorzugsweise sind zwischen jeweils zwei angrenzenden ersten Förderkanälen 183 zwei voneinander beabstandete dritte Förderkanäle 184A vorgesehen. Wenn die Stapelvorrichtung 10 der vorliegenden Erfindung in einem Wasserelektrolysestapel angewendet wird, erleichtert diese Konfiguration die einfache Beförderung einer großen Menge Wasser zum Katalysatorbeschichtungsfilm 13 und erleichtert das rechtzeitige Abführen von Sauerstoffgas, das durch eine Hydrolysereaktion erzeugt wird, und von überschüssigem Sauerstoffgas. Wenn jedoch die Stapelvorrichtung 10 der vorliegenden Erfindung in einer Brennstoffzelle angewendet wird, erleichtert diese Konfiguration die einfache Beförderung von sowohl Luft als auch Wasserstoffgas zum Katalysatorbeschichtungsfilm 13 und verbessert dadurch die Produktionsleistung der Stapelvorrichtung 10.

Des Weiteren können beim Zusammenbau des Katalysatorbeschichtungsfilms 13, der Kathodenanordnung, der Anodenanordnung und des Montagerahmens 14 jeder Stapeleinheit 10 Montagelücken auftreten, und diese Montagelücken können bei der Beförderung zum Austreten von Wasserstoffgas und Sauerstoffgas führen und können sogar dazu führen, dass Sauerstoffgas auf der Anodenseite in Wasserstoffgas auf der Kathodenseite entweicht. Um die Dichtheit für Wasserstoffgas und Sauerstoffgas zu verbessern, kann daher zwischen dem Katalysatorbeschichtungsfilm 13 und der Anodenanordnung sowie zwischen dem Katalysatorbeschichtungsfilm 13 und der Kathodenanordnung eine Dichtung vorgesehen werden. Beispielsweise, wie in FIG. 2 gezeigt, ist eine Kathodendichtung 21 zwischen der Kathodenplatte 17 der Kathodenanordnung und dem Montagerahmen 14 angeordnet, um das Austreten von Wasserstoffgas in die Außenumgebung zu verringern. Die Kathodendichtung weist eine rechteckige Querschnittsform auf. In ähnlicher Weise ist auch zwischen der Anodenplatte 19 der Anodenanordnung und dem Montagerahmen 14 ein Anodendichtungsring 22 vorgesehen, um das Austreten von Sauerstoffgas in die Außenumgebung zu verringern. Die Anodendichtung weist eine rechteckige Querschnittsform auf. In einer beispielhaften Ausführungsform weisen die Kathodendichtung 21 und der Anodendichtungsring 22 die gleiche Querschnittsform auf. Natürlich ist die vorliegende Erfindung nicht darauf beschränkt. Die Kathodendichtung und der Anodendichtungsring können unterschiedliche Querschnittsformen aufweisen oder aus unterschiedlichen Materialien bestehen, solange sie die Wirkung einer verbesserten Dichtheit für Wasserstoffgas und Sauerstoffgas erreichen.

Um den Gasaustritt aus der Anodenseite der Stapeleinheit zur Kathodenseite der Stapeleinheit weiter zu verringern, ist an einer Verbindung zwischen dem Montagerahmen 14 und dem Katalysatorbeschichtungsfilm 13 ein Isolationsteil 23 vorgesehen. Das Isolationsteil 23 ist teilweise in einer Nut untergebracht, die im Montagerahmen 14 gebildet ist, und liegt an einer Oberfläche auf der Anodenseite des Katalysatorbeschichtungsfilms 13 an.

Die vorstehende Beschreibung erfolgt anhand des Beispiels der Anwendung der Stapelvorrichtung gemäß der Ausführungsform der vorliegenden Erfindung in einem Wasserelektrolysestapel, die vorliegende Erfindung ist jedoch nicht darauf beschränkt und die Stapelvorrichtung 100 gemäß der Ausführungsform der vorliegenden Erfindung kann auch in einer Brennstoffzelle angewendet werden. In einem Beispiel, bei dem die Stapelvorrichtung 100 in einer Brennstoffzelle angewendet wird, erreicht sauerstoffgashaltige Luft den Katalysatorbeschichtungsfilm 13 über die Vielzahl von ersten Förderkanälen 183, während Wasserstoffgas den Katalysatorbeschichtungsfilm 13 über die Vielzahl von zweiten Förderkanälen 184 (z. B. die Vielzahl von dritten Förderkanälen 184A und/oder die Vielzahl von vierten Förderkanälen 184B) erreicht; anschließend durchlaufen Sauerstoffgas und Wasserstoffgas eine Hydratisierungsreaktion, um mittels der Funktion des Katalysatorbeschichtungsfilms 13 Wasser zu erzeugen, und das erzeugte Wasser wird durch Komponenten wie die Kathodendiffusionsschicht 15 der Kathodenanordnung abgeführt. Mittels der ersten Förderkanäle 183 und der zweiten Förderkanäle 184 mit den vorstehend genannten Konfigurationen kann eine große Menge sauerstoffgashaltiger Luft und Wasserstoffgas problemlos dem Katalysatorbeschichtungsfilm 13 zugeführt werden, wodurch die Energieeffizienz der Brennstoffzelle verbessert werden kann.

Obwohl die vorliegende Anmeldung unter Bezugnahme auf die bevorzugten Ausführungsformen beschrieben wurde, können verschiedene Verbesserungen vorgenommen und Komponenten darin durch Äquivalente ersetzt werden, ohne von dem Schutzumfang der vorliegenden Anmeldung abzuweichen, und insbesondere können verschiedene in verschiedenen Ausführungsformen erwähnte technische Merkmale auf beliebige Weise kombiniert werden, solange kein struktureller Konflikt besteht. Die vorliegende Anmeldung ist nicht auf die hierin offenbarten spezifischen Ausführungsformen beschränkt, sondern umfasst alle technischen Lösungen, die in den Schutzumfang der Ansprüche fallen.

## Patentansprüche

1. Stapelvorrichtung (100) für einen Wasserelektrolysestapel oder eine Brennstoffzelle, wobei die Stapelvorrichtung (100) mindestens eine Stapeleinheit (10) umfasst, wobei jede Stapeleinheit (10) einen Katalysatorbeschichtungsfilm (13), eine Kathodenanordnung und eine Anodenanordnung umfasst und die Kathodenanordnung und die Anodenanordnung jeweils auf zwei gegenüberliegenden Seiten des Katalysatorbeschichtungsfilms (13) vorgesehen sind,
wobei die Anodenanordnung eine Anodendiffusionsschicht (18) umfasst, die Anodendiffusionsschicht (18) eine erste Diffusionsschicht (181) und eine zweite Diffusionsschicht (182) umfasst, die entlang einer Dickenrichtung (Z) der Stapeleinheit (10) aufeinander gestapelt sind, die erste Diffusionsschicht (181) und die zweite Diffusionsschicht (182) konfiguriert sind, um es einem Fluid zu ermöglichen, durch sie hindurch in den Katalysatorbeschichtungsfilm (13) und/oderaus dem Katalysatorbeschichtungsfilm (13) zu strömen, und
wobei eine Vielzahl von ersten Förderkanälen (183) und eine Vielzahl von zweiten Förderkanälen (184) zwischen der ersten Diffusionsschicht (181) und der zweiten Diffusionsschicht (182) gebildet sind, die Vielzahl von ersten Förderkanälen (183) und die Vielzahl von zweiten Förderkanälen (184) sich in einer Richtung senkrecht zur Dickenrichtung (Z) der Stapeleinheit (10) erstrecken und die Vielzahl von zweiten Förderkanälen (184) im Verhältnis zu der Vielzahl von ersten Förderkanälen (183) näher an der ersten Diffusionsschicht (181) vorgesehen sind.

2. Stapelvorrichtung (100) nach Anspruch 1, wobei
eine Breite jedes der ersten Förderkanäle (183) größer ist als eine Breite jedes der zweiten Förderkanäle (184), und eine Tiefe jedes der ersten Förderkanäle (183) größer ist als eine Tiefe jedes der zweiten Förderkanäle (184).

3. Stapelvorrichtung (100) nach Anspruch 1 oder 2, wobei
sich jeder der ersten Förderkanäle (183) durch die Anodendiffusionsschicht (18) entlang einer ersten Richtung (X) erstreckt, die Vielzahl von zweiten Förderkanälen (184) eine Vielzahl von dritten Förderkanälen (184A), die sich durch die Anodendiffusionsschicht (18) entlang der ersten Richtung (X) erstrecken, und eine Vielzahl von vierten Förderkanälen (184B) umfasst, die sich durch die Anodendiffusionsschicht (18) entlang einer zweiten Richtung (Y) erstrecken, welche die erste Richtung (X) schneidet, und die erste Richtung (X) und die zweite Richtung (Y) beide senkrecht zur Dickenrichtung (Z) der Stapeleinheit (10) verlaufen.

4. Stapelvorrichtung (100) nach Anspruch 3, wobei
die ersten Förderkanäle (183) und die dritten Förderkanäle (184A) sowie die vierten Förderkanäle (184B) miteinander in Fluidverbindung stehen.

5. Stapelvorrichtung (100) nach Anspruch 3, wobei
die Vielzahl von ersten Förderkanälen (183) und die Vielzahl von dritten Förderkanälen (184A) in der zweiten Richtung (Y) zueinander versetzt sind und zwischen jeweils zwei angrenzenden ersten Förderkanälen (183) zwei oder mehr voneinander beabstandete dritte Förderkanäle (184A) vorgesehen sind.

6. Stapelvorrichtung (100) nach Anspruch 3, wobei
sich jeder der ersten Förderkanäle (183) linear entlang der ersten Richtung (X) erstreckt, sich jeder der dritten Förderkanäle (184A) linear oder krummlinig entlang der ersten Richtung (X) erstreckt und sich jeder der vierten Förderkanäle (184B) linear oder krummlinig entlang der zweiten Richtung (Y) erstreckt.

7. Stapelvorrichtung (100) nach Anspruch 1, wobei
die erste Diffusionsschicht (181) und die zweite Diffusionsschicht (182) integral gebildet sind.

8. Stapelvorrichtung (100) nach Anspruch 7, wobei
die erste Diffusionsschicht (181) und die zweite Diffusionsschicht (182) durch ein 3D-Druckverfahren hergestellt sind.

9. Stapelvorrichtung (100) nach Anspruch 1, wobei
die erste Diffusionsschicht (181) näher an dem Katalysatorbeschichtungsfilm (13) vorgesehen ist als die zweite Diffusionsschicht (182) und eine Dicke der ersten Diffusionsschicht (181) geringer ist als eine Dicke der zweiten Diffusionsschicht (182).

10. Stapelvorrichtung (100) nach Anspruch 1, wobei
die erste Diffusionsschicht (181) eine Vielzahl von ersten Löchern aufweist, die es einem Fluid ermöglichen, durch die erste Diffusionsschicht (181) zu strömen, die zweite Diffusionsschicht (182) eine Vielzahl von zweiten Löchern aufweist, die es einem Fluid ermöglichen, durch die zweite Diffusionsschicht (182) zu strömen, und die Größen der ersten Löcher der ersten Diffusionsschicht (181) kleiner sind als die Größen der zweiten Löcher der zweiten Diffusionsschicht (182).

11. Stapelvorrichtung (100) nach Anspruch 1, wobei
die Anodenanordnung eine Anodenplatte (19) umfasst und die Anodendiffusionsschicht (18) zwischen dem Katalysatorbeschichtungsfilm (13) und der Anodenplatte (19) vorgesehen ist.

12. Wasserelektrolysestapel, umfassend die Stapelvorrichtung (100) nach einem der Ansprüche 1 bis 11.

13. Brennstoffzelle, umfassend die Stapelvorrichtung (100) nach einem der Ansprüche 1 bis 11.
